# EUROPEAN PATENT APPLICATION

(11) **EP 2 072 393 A1**
(43) Date of publication of application: **24.06.2009**
(21) Application number: 07024939.6
(22) Date of filing: 21.12.2007
(51) Int. Cl.: B63H 23/24, H02H 9/00, H02J 4/00, H02H 9/08

(54) **Electrical system for floating installation, in particular offshore vessel, with a feeding comprising a combined transformer for resistance grounding and transformer pre-magnetization**

(71) Applicant: SIEMENS AKTIENGESELLSCHAFT, 80333 München (DE)
(72) Inventor: Van Ravens, Rune, 0566 Oslo (NO)

(57) **Abstract**

Electrical system for floating installation, in particular offshore vessel, with combined transformer feeding for resistance grounding and transformer pre-magnetization

## Description

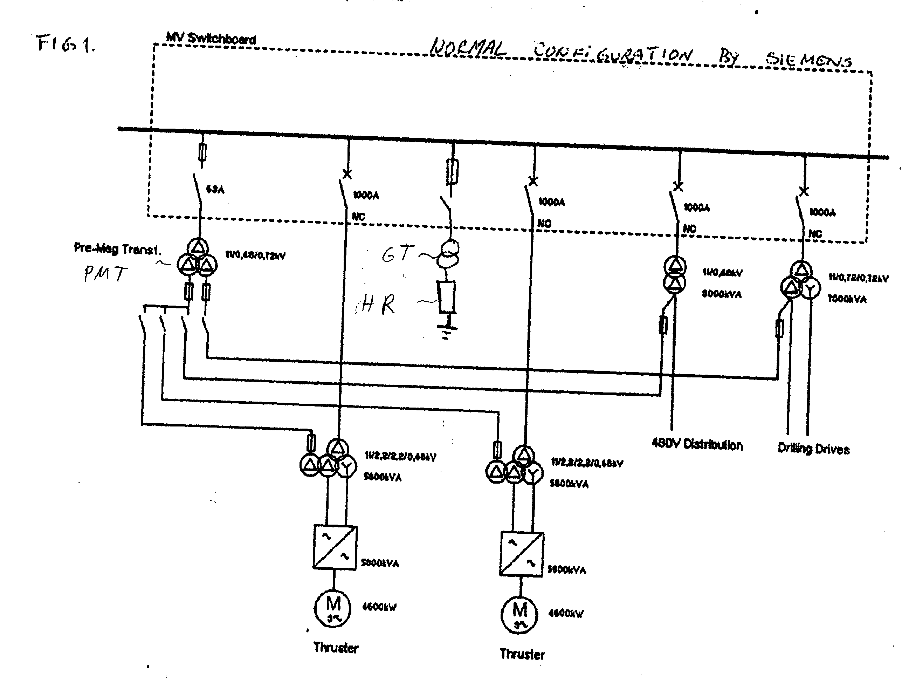

**1. Which technical problem or which problem that can be solved with technical means is the basis for the invention?**
   1. On floating installations, in particular on offshore vessels, earthing of the onboard electrical system is frequently achieved through high resistance (HR) grounding. i.e. having a resistor between the system and ground (the steel structure of the floating installation, e.g. the vessel, defined as "earth". Resistors can be connected at the neutral point of one or more generators. If the quantity of generators is high, it is preferable to connect the resistors to the main switchgear via a special transformer. Contrary to a normal three phase transformer, such HR grounding transformers has a fourth iron core "legs". This is to allow return path of zero sequence earth current.
   Modern vessels with electrical propulsion power have increased installed power and resulting distribution transformers that may cause problems of "in rush" current when connecting "large" transformers. Separate transformers are been used to pre-magnetize transformers from their secondary side prior to connecting to the main switchgear. Worst case, one pre-magnetization transformer would be required for each different secondary side voltage level of the transformers to be pre-magnetized.
**2. How has this problem been solved up to now?**
   2. As noted above, each main switchboard would normally require as a minimum one (1) pre-magnetization transformer with separate feeder and cables, and one (1) HR grounding transformers with separate feeder and cables. On a "dynamically positioned" (DP) vessel (i.e. keeping at positing with thrusters/ propellers during operation), one set of feeders and cables is required per main switchboard (normally 3-4 switchboards).
**3. By which technical features of the invention is the problem named under point 1 solved?**
   One or more pre-magnetization transformers and one HR grounding transformer are combined into one (transformer) unit.
   Also one or more pre-magnetization transformers and more than one HR grounding transformers can be combined into one (transformer) unit.
   In a preferred embodiment, for each main switchboard, one or more pre-magnetization transformers and one (or more) HR grounding transformers are combined into one (transformer) unit.
**4. Which advantages are gained by the technical features of the invention indicated under point 3?**
   The invention reduces the required main switchgear feeders and cabling by 50% or better. The reduced installed equipment results in:
   - Reduced procurement cost (CAPEX) for transformers, main switchgear (feeders) and cables.
   - Reduced installation as a result of less equipment and cables.
   - Reduced weight and space required on the vessel
**5. Drawing(s) of example(s) or alternative solution(s)**
   Principal sketch
   Fig.1 - Siemens enhanced configuration, yet separate feeders for HR earthing and pre-magnetization

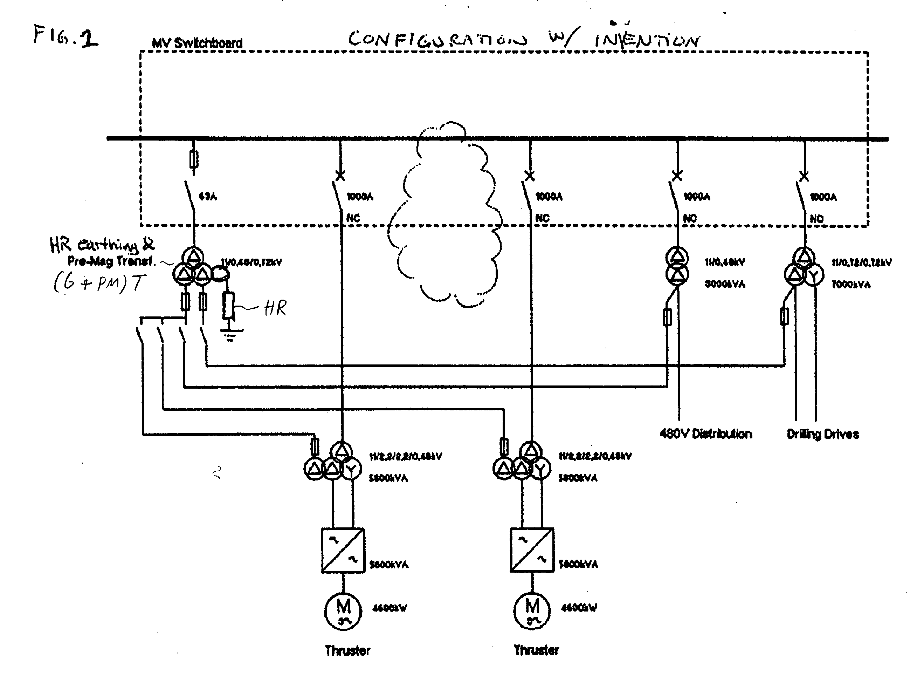

   Fig.2 - Configuration with invention, combined feeders for HR earthing and pre-magnetization

Abbreviations used in the figures:
HR = High Resistance Resistor
GT = Grounding transformer
PMT = Pre-Magnetization Transformer
(G + PM) T = Combined Grounding + Pre-Magnetization Transformer

## Claims

1. Electrical system for floating installation, in particular offshore vessel, with combined transformer feeding for resistance grounding and transformer pre-magnetization.
